# FASCICULE DE BREVET EUROPEEN

(11) **EP 2 238 472 B1**
(45) Date de publication et mention de la délivrance du brevet: **13.12.2017**
(21) Numéro de dépôt: 09704200.6
(22) Date de dépôt: 09.01.2009
(51) Int. Cl.: G01T 1/14, G01T 1/178

(54) **DETECTEUR DE RADON ET DISPOSITIF DE DETECTION EN CONTINU INTEGRANT LEDIT DETECTEUR**
RADONDETEKTOR UND DAUERDETEKTIONSGERÄT MIT EINEM DERARTIGEN DETEKTOR
RADON DETECTOR AND CONTINUOUS DETECTION DEVICE INCLUDING SUCH DETECTOR

(30) Priorité: 10.01.2008 FR 0850119
(43) Date de publication de la demande: 13.10.2010
(73) Titulaire: Pe@rl, 87000 Limoges (FR)
(72) Inventeur: NIORT, Isabelle, F-87510 Nieul (FR); DECOSSAS, Jean-Louis, F-87520 Cieux (FR)
(74) Mandataire: Aquinov
(86) Numéro de dépôt international: PCT/FR2009/050029
(87) Numéro de publication internationale: WO 2009/092945

(56) Documents cités:
- FR-A- 2 728 691
- JP-A- 2006 148 048
- US-A- 4 104 523
- US-A- 5 029 248
- US-A- 5 489 780
- US-A1- 2007 158 708

## Description

La présente invention concerne un dispositif de détection de radon et de ses descendants présents dans l'air environnant tel que définit par la revendication 1. Le radon est un gaz inerte et radio actif, sans odeur, sans goût, sans couleur donc indétectable par les sens de l'être humain.

Le radon est un gaz naturel qui résulte essentiellement de la désintégration de l'uranium omniprésent dans toutes les roches et sols sur toute la planète.

Les sols libèrent le radon. Lorsqu'il se désintègre, il donne des produits de filiation, dits aussi descendants, Polonium 218 et Polonium 214 par exemple.

Le radon en lui-même n'est que peu dangereux pour la santé car il est inhalé et exhalé rapidement sans se fixer dans les poumons, l'infime part qui peut éventuellement passer dans le sang et à la suite dans le corps n'engendre pas de risques importants de développement de cancer.

Par contre, les descendants à vie courte, à durée de vie inférieure à une heure, qui émettent des rayonnements et notamment des particules alpha, tendent à se fixer sur les poussières et particules de l'air, les aérosols et/ou les particules de fumées qui peuvent se déposer sur les parois des voies respiratoires, pénétrant dans les muqueuses. De fait, les particules alpha qui leur sont associées peuvent endommager l'ADN et devenir une source importante de cancers pulmonaires par reproduction de cet ADN dégradé.

Les habitants d'une maison dans laquelle du radon peut s'accumuler pour atteindre une activité volumique dangereuse pour la santé sont très exposés car il y a confinement sur des périodes de temps longues. De plus, les résidences actuellement construites sont de plus en plus isolées et en outre, la ventilation et l'aération de ces habitations ne sont pas toujours suffisantes.

Le radon peut pénétrer dans les habitations de différentes façons, par exemple par les fissures du plancher et des murs, les interstices entre les murs et les planchers, du fait de la porosité existante dans les murs.

Aussi, il s'avère très important de pouvoir mesurer le radon et ses descendants dans les habitations et les locaux ouverts au public et de surveiller l'évolution des taux.

Le radon présent dans l'air se mesure par son activité volumique, exprimée en becquerel par mètre cube. Ainsi, pour les lieux ouverts au public, une législation connue prévoit un taux de 400 Bq/m³ comme limite de l'activité volumique acceptable pour la santé humaine. A partir de 1 000 Bq/m³, une intervention est nécessaire.

Les législations prévoient même de limiter le taux limite à 200 Bq/m³ pour les constructions neuves.

On connaît des appareils pour mesurer le radon mais ils ne répondent pas aux besoins des utilisateurs ou des organismes chargés de la détection, de la surveillance et des interventions pour remédier aux problèmes.

Ainsi, le brevet US 4 104 523 décrit un dispositif avec un détecteur à semiconducteur permettant de compter les particules alpha. L'invention prévoit des moyens pour diminuer le taux d'hygrométrie de l'air environnant ledit détecteur afin de le préserver. De fait ce dispositif est difficilement pérenne, onéreux et surtout délicat à utiliser par des particuliers.

Le brevet US 5 029 248 décrit un dispositif de capture électrostatique et de mesure du radon. Ce dispositif comporte une électrode centrale négative et une électrode positive, toutes deux disposées dans une enceinte. L'électrode positive est sous forme d'un dôme se prolongeant par des parois en forme de tronc de cône de façon à concentrer les particules vers l'électrode négative.

L'électrode négative est recouverte d'un film électro-conducteur perméable aux rayonnements alpha.

Le brevet FR 2 728 691 est relatif à de la mesure de radon 222 afin de réaliser des étalons.

Il existe aussi des appareils permettant de détecter des traces nucléaires ou une décharge électrostatique comme les chambres d'ionisation à électret mais ils sont à usage unique.

Il existe aussi un moniteur du commerce dont la dénomination est "Radim 3A" qui permet de détecter et de mesurer en continu le taux de radon mais il est encombrant du fait que l'électrode doit travailler sous dôme, à l'abri de la lumière et des photons. De plus, il est onéreux et sa sensibilité est insuffisante. Le but de la présente invention est de proposer un détecteur apte à travailler à l'air libre, simple à utiliser, peu encombrant, susceptible de mémoriser un grand nombre de mesures et d'en permettre la restitution, d'un prix de revient compatible avec les besoins des particuliers. US5489780 décrit un détecteur de radon et de ses descendants présents dans l'air environnant, comprenant une jonction PN formant électrode de collecte des radionucléides. Ce document décrit aussi des moyens de collecte électrostatique des aérosols incluant une électrode conductrice périphérique et une électrode conductrice de collecte centrale, et une chaîne électronique de traitement des signaux issus dudit détecteur. Le dispositif de détection selon la présente invention est maintenant décrit en regard des dessins annexés sur lesquels les différentes figures montrent, de façon non limitative :
- figure 1 : une vue schématique de principe du détecteur selon la présente invention,
- figure 2 : une vue de la chaîne électronique de traitement des signaux associée au détecteur de sorte à réaliser un dispositif de détection, et
- figures 3 : une variante de réalisation.

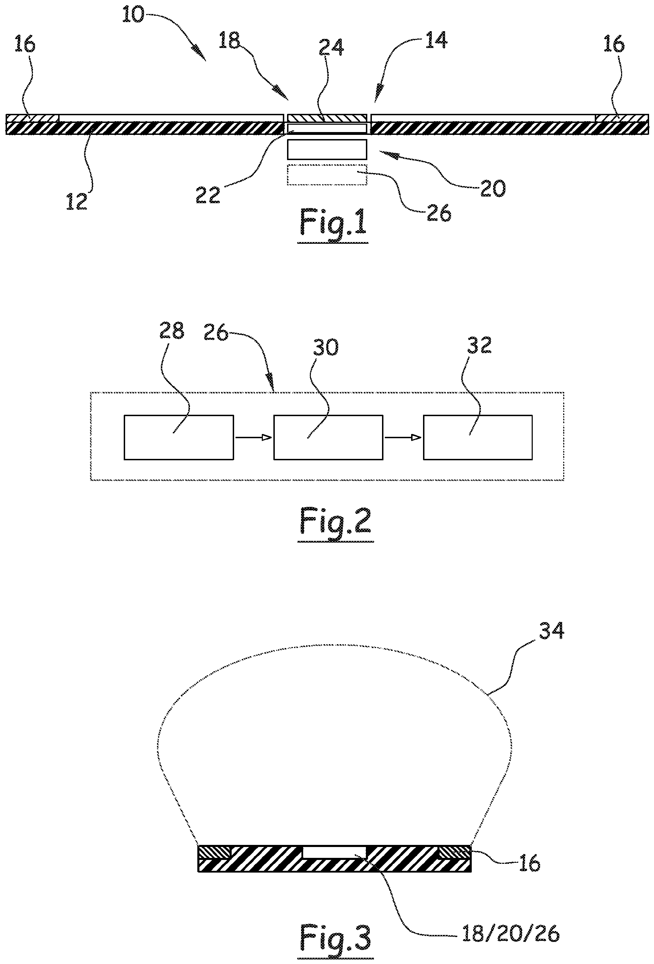

Sur la figure 1, on a représenté le dispositif de détection 10 selon la présente invention, sous forme schématique, dans un mode de réalisation principal.

Le dispositif de détection comporte un support 12 sous forme d'un disque en matériau isolant, par exemple de 5 à 50 cm de diamètre. L'épaisseur est fonction du matériau mais il faut que le support soit rigide.

Ce support 12 comprend une électrode 16 conductrice qui est une partie des moyens 14 de collecte électrostatique des aérosols. Cette électrode 16 est avantageusement une couronne en acier inoxydable, en aluminium, en cuivre, ou en métal revêtu comme de l'acier avec une couche déposée en phase vapeur ou même une couche mince déposée directement sur le support 12 en matériau isolant.

Cette forme annulaire permet de supprimer les effets de pointe et d'être parfaitement symétrique.

L'électrode 16 conductrice périphérique est portée dans le mode de réalisation retenu, au potentiel élevé de 10 à 2 000 volts pour donner un ordre de grandeur, cette valeur étant fonction de nombreux paramètres : géométrie, distance entre électrodes, plage de concentrations mesurées, comme il sera expliqué plus avant. Au centre du support 12 en matériau isolant, on trouve l'autre électrode 18 conductrice dite de collecte qui est l'autre partie des moyens 14 de collecte électrostatique des aérosols.

L'électrode 18 conductrice de collecte est placée dans un trou ménagé dans le support 12.

Cette électrode 18 conductrice de collecte selon l'invention intègre un détecteur 20 qui comprend une jonction PN intégrée sur silicium avec une zone désertée de 5 à 100 *µ*m pour donner un ordre d'idée ; la surface de cette électrode est de 4 à 100 mm².

L'épaisseur de cette zone est fonction de la détection recherchée.

La pastille de silicium intégrant le détecteur 20 est recouverte par une couche 22 de passivation, en l'occurrence en silice et par une couche 24 conductrice qui constitue l'électrode 18 conductrice proprement dite.

Cette couche 24 conductrice, dans le mode de réalisation retenu, comprend une couche de carbone de 0,05 à 5*µ*m d'épaisseur sur laquelle est rapportée une couche d'aluminium de 0,05 à 5 *µ*m d'épaisseur.

L'électrode 18 intégrant le détecteur 20 est disposée préférentiellement de sorte que sa surface se situe dans le plan du support 12 isolant.

L'électrode 18 conductrice de collecte est portée au potentiel bas de façon à collecter les radionucléides notamment véhiculés par les aérosols.

Ce sont les rayonnements émis par ces radio éléments qui peuvent être captés par le détecteur 20.

On note que l'électrode 18 assure de façon synergique une protection du détecteur.

Les signaux issus de ce détecteur 20 et du dispositif qui l'inclut, sous l'action des rayonnements nucléaires, sont traités par une chaîne électronique 26.

Cette chaîne, représentée schématiquement et à titre d'exemple sur la figure 2, inclut au moins les éléments suivants : un préamplificateur 28 et un étage 30 de mise en forme de l'impulsion de sortie du préamplificateur pour l'adapter au circuit et/ou au système auquel elle est destinée.

Cette chaîne peut être intégrée, bien entendu, la représentation étant seulement illustrative.

Il est aussi possible de réaliser un amplificateur différentiel destiné à améliorer la discrimination entre le signal et le bruit de fond, notamment le bruit électronique généré par le circuit.

On peut inclure un discriminateur 32 afin de pouvoir éliminer les signaux parasites générés par les interactions gamma et/ou les rayonnements bêta.

Il est aussi possible de délimiter le volume de gaz analysé en prévoyant une enceinte 34 périphérique perforée entourant le détecteur, comme montré sur la figure 3.

Dans ce cas, c'est l'enceinte 34 périphérique qui est conductrice et portée au potentiel haut par contact avec l'électrode 16, le volume de l'enceinte 34 pouvant varier de 0,1 à 50 litres pour donner un ordre de grandeur.

On comprend que le détecteur selon l'invention présente l'avantage de pouvoir travailler à l'air libre et à la lumière car la couche de passivation et la couche conductrice telles que déposées assurent la protection de la jonction PN ménagée dans le silicium tout en permettant la collecte des charges recherchées, liées à un aérosol.

Dans le cas du détecteur selon la présente invention, on constate même une augmentation de la sensibilité car certaines charges sont libres, donc non liées à un aérosol, mais elles sont néanmoins captées par la couche 24 conductrice et on peut recueillir les rayonnements qu'elles émettent.

L'électrode externe permet dans ce cas d'augmenter le volume de détection. Selon un mode de réalisation perfectionné de l'invention, la couche 24 conductrice présente à son interface avec l'air des rugosités.

Ainsi, on augmente la surface de collecte d'une part mais surtout on provoque une multitude d'effets de pointe qui contribuent à augmenter de façon très significative la collecte.

Ces rugosités peuvent être générées lors du dépôt en phase vapeur des métaux de l'électrode 18 de collecte tel que l'aluminium, au besoin en utilisant des masques.

L'épaisseur de ces rugosités doit rester inférieure à 1 micromètre.

Afin de rendre le dispositif de détection compact, l'invention prévoit une intégration en réalisant l'ensemble sous forme d'un circuit intégré spécifique à cette application, un ASIC.

En complément, les impulsions de charges amplifiées et mises en forme peuvent être traitées après une conversion analogique/numérique pour établir un spectre en énergie des rayonnements détectés par le capteur.

On peut aussi adjoindre au circuit intégré des compteurs, des discriminateurs de montée des impulsions en fonction des besoins.

Selon un mode de réalisation miniaturisé et optimisé, le détecteur est rapporté sur une clé du type clé USB (Universal Serial Bus). Dans ce cas, la clé assure la mémorisation et comprend les moyens de connexion et de transfert des données issues du détecteur vers un logiciel de visualisation et/ou d'interprétation.

## Revendications

1. Dispositif de détection (10) de radon et de ses descendants présents dans l'air environnant incluant notamment des aérosols, comprenant:
- un détecteur (20), le dit détecteur comprenant
- une pastille de silicium intégrant une jonction PN avec une zone désertée, destinée à émettre des signaux sous l'action des rayonnements émis par ledit radon et lesdits descendants,
- un support (12) en matériau isolant, ledit support comprenant des moyens (14) de collecte électrostatique des aérosols incluant une électrode (16) conductrice périphérique et une électrode (18) conductrice de collecte centrale, et
- une chaîne électronique (26) de traitement des signaux issus dudit détecteur (20), ledit dispositif de détection étant **caractérisé en ce que** le détecteur (20) comprend une couche (22) de passivation qui recouvre cette pastille de silicium et permet au détecteur de travailler à l'air libre, et une couche (24) conductrice recouvrant la couche de passivation et formant l'électrode (18) de collecte des radionucléides.

2. Dispositif de détection(10) de radon et de ses descendants selon la revendication 1, **caractérisé en ce que** la couche (24) conductrice présente des rugosités à son interface avec l'air.

3. Dispositif de détection (10) de radon et de ses descendants selon la revendication 1 ou 2, **caractérisé en ce que** la couche (24) conductrice est une couche de carbone de 0,05 à 5µm d'épaisseur surmontée d'une couche d'aluminium de 0,05 à 5µm d'épaisseur et la couche de passivation est une couche de silice, la surface étant comprise entre 4 et 100 mm².

4. Dispositif de détection de radon et de ses descendants selon la revendication 1,2 ou 3, **caractérisé en ce que** le support (12) isolant est sous forme d'un disque.

5. Dispositif de détection de radon et de ses descendants selon la revendication 4, **caractérisé en ce que** l'électrode (18) intégrant le détecteur (20) est disposée de sorte que sa surface se situe dans le plan du support (12) isolant.

6. Dispositif de détection de radon et de ses descendants selon l'une quelconque des revendications précédentes, **caractérisé en ce qu'**il comprend une enceinte (34) conductrice périphérique, perforée, entourant le détecteur (20) et au contact de l'électrode (16) conductrice périphérique.

7. Dispositif de détection de radon et de ses descendants selon l'une quelconque des revendications précédente, **caractérisé en ce que** la chaîne (26) électronique de traitement comprend un préamplificateur (28) et un étage (30) de mise en forme de l'impulsion de sortie du préamplificateur pour l'adapter au circuit et/ou au système auquel elle est destinée.

8. Dispositif de détection de radon et de ses descendants selon l'une quelconque des revendications précédentes, **caractérisé en ce qu'**il comprend un amplificateur différentiel destiné à améliorer la discrimination entre le signal et le bruit de fond.

9. Dispositif de détection de radon et de ses descendants selon l'une quelconque des revendications précédentes, **caractérisé en ce qu'**il comprend un discriminateur (32) afin de pouvoir éliminer les signaux parasites générés par les interactions gamma et/ou les rayonnements bêta.

## Patentansprüche

1. Detektionsvorrichtung (10) für Radon und dessen Zerfallsprodukte in der Umgebungsluft, insbesondere einschließlich Aerosole mit:
- einem Detektor (20), wobei der Detektor einen Siliziumchip umfasst, der einen PN-Übergang mit einer Raumladungszone einschließt, die dazu bestimmt ist, unter der Einwirkung von Strahlung, die von Radon und den Zerfallsprodukten abgegeben wird, Signale zu emittieren,
- einem Träger (12) aus einem Isolator, wobei der Träger Mittel (14) zum elektrostatischen Einsammeln von Aerosolen aufweist und eine äußere leitende Elektrode (16) und eine zentrale leitende Sammelelektrode (18) umfasst, und
- einer elektronischen Verarbeitungskette (26) für die von dem Detektor (20) abgegebenen Signale, wobei die Detektionsvorrichtung **dadurch gekennzeichnet ist, dass** der Detektor (20) eine Passivierungsschicht (22) aufweist, die den Siliziumchip abdeckt und dem Detektor ermöglicht, im Freien zu arbeiten, und eine leitende Schicht (24) aufweist, die die Passivierungsschicht abdeckt und die Sammelelektrode (18) für die Radionuklide bildet.

2. Detektionsvorrichtung (10) für Radon und dessen Zerfallsprodukte nach Anspruch 1, **dadurch gekennzeichnet, dass** die leitende Schicht (24) an ihrer der Luft zugewandten Seite Rauigkeiten aufweist.

3. Detektionsvorrichtung (10) für Radon und dessen Zerfallsprodukte nach Anspruch 1 oder 2, **dadurch gekennzeichnet, dass** die leitende Schicht (24) eine Kohlenstoffschicht mit einer Dicke zwischen 0,05 bis 5 µm ist, die von einer Aluminiumschicht mit einer Dicke zwischen 0,05 bis 5 µm überdeckt ist, und dass die Passivierungsschicht eine Quarzschicht ist, deren Oberfläche zwischen 4 und 100 mm² beträgt.

4. Detektionsvorrichtung für Radon und dessen Zerfallsprodukte nach Anspruch 1, 2 oder 3, **dadurch gekennzeichnet, dass** der isolierende Träger (12) als Scheibe ausgebildet ist.

5. Detektionsvorrichtung für Radon und dessen Zerfallsprodukte nach Anspruch 4, **dadurch gekennzeichnet, dass** die den Detektor (20) umfassende Elektrode (18) derart angeordnet ist, dass sich ihre Oberfläche in der Ebene des isolierenden Trägers (12) befindet.

6. Detektionsvorrichtung für Radon und dessen Zerfallsprodukte nach einem der vorhergehenden Ansprüche, **dadurch gekennzeichnet, dass** diese eine leitende perforierte äußere Hülle (34) aufweist, die den Detektor (20) umgibt und in Kontakt mit der äußeren leitenden Elektrode (16) steht.

7. Detektionsvorrichtung für Radon und dessen Zerfallsprodukte nach einem der vorhergehenden Ansprüche, **dadurch gekennzeichnet, dass** die elektronische Verarbeitungskette (26) einen Vorverstärker (28) und eine Stufe (30) aufweist, die dazu dient, die Pulse am Ausgang des Vorverstärkers zu formen, um diese an die Schaltungen und/oder die Systeme anzupassen, für die diese bestimmt sind.

8. Detektionsvorrichtung für Radon und dessen Zerfallsprodukte nach einem der vorhergehenden Ansprüche, **dadurch gekennzeichnet, dass** diese einen Differenzverstärker aufweist, der dazu bestimmt ist, die Unterscheidung zwischen dem Signal und dem Hintergrundrauschen zu verbessern.

9. Detektionsvorrichtung für Radon und dessen Zerfallsprodukte nach einem der vorhergehenden Ansprüche, **dadurch gekennzeichnet, dass** diese einen Diskriminator (32) aufweist, um parasitäre Signale zu entfernen, die durch die Einwirkung von Gamma- und/oder Betastrahlung erzeugt werden.

## Claims

1. A device (10) for detecting radon and progeny thereof present in the surrounding air, including in particular aerosols, comprising:
- a detector (20), said detector comprising
- a silicon chip integrating a p-n junction with a depletion region, intended to emit signals under the action of the radiation emitted by said radon and said progeny,
- a support (12) made from insulating material, said support comprising means (14) for the electrostatic collection of aerosols including a peripheral conductive electrode (16) and a central conductive collection electrode (18), and
- an electronic chain (26) for processing the signals issuing from said detector (20), said detection device being **characterised in that** the detector (20) comprises a passivation layer (22) that covers this silicon chip and enables the detector to work in the open air, and a conductive layer (24) covering the passivation layer and forming the electrode (18) for collecting the radionuclides.

2. A device (10) for detecting radon and progeny thereof according to claim 1, **characterised in that** the conductive layer (24) has roughnesses at its interface with the air.

3. A device (10) for detecting radon and progeny thereof according to claim 1 or 2, **characterised in that** the conductive layer (24) is a layer of carbon 0.05 to 5 *µ*m thick surmounted by a layer of aluminium 0.05 to 5 *µ*m thick, and the passivation layer is a layer of silica, the surface area being between 4 and 100 mm².

4. A device for detecting radon and progeny thereof according to claim 1, 2 or 3, **characterised in that** the insulating support (12) is in the form of a disc.

5. A device for detecting radon and progeny thereof according to claim 4, **characterised in that** the electrode (18) integrating the detector (20) is disposed so that its surface is situated in the plane of the insulating support (12).

6. A device for detecting radon and progeny thereof according to any of the preceding claims, **characterised in that** it comprises a perforated peripheral conductive enclosure (34) surrounding the detector (20) and in contact with the peripheral conductive electrode (16).

7. A device for detecting radon and progeny thereof according to any of the preceding claims, **characterised in that** the electronic processing chain (26) comprises a preamplifier (28) and a stage (30) for shaping the output pulse from the preamplifier in order to adapt it to the circuit and/or to the system for which it is intended.

8. A device for detecting radon and progeny thereof according to any of the preceding claims, **characterised in that** it comprises a differential amplifier intended to improve the discrimination between the signal and the background noise.

9. A device for detecting radon and progeny thereof according to any of the preceding claims, **characterised in that** it comprises a discriminator (32) in order to be able to eliminate the parasitic signals generated by the gamma interactions and/or the beta radiations.
